# EUROPEAN PATENT APPLICATION

(11) **EP 1 561 979 A1**
(43) Date of publication of application: **10.08.2005**
(21) Application number: 04100470.6
(22) Date of filing: 09.02.2004
(51) Int. Cl.: F16K 1/22, F02D 9/10

(54) **Throttle device**

(71) Applicant: Delphi Technologies, Inc., Troy, MI 48007 (US)
(72) Inventor: Fromentin, Sylvie, 8447, Steinfort (LU); Cantor, Christian, 54430, Rehon-Heumont (FR)
(74) Representative: Schmitt, Armand

(57) **Abstract**

A throttle device (10) for controlling a gas flow, in particular in an internal combustion engine, the throttle device (10) comprising a throttle flap (20) rotationally arranged in a duct (12) for controlling a gas flow there through, the throttle flap (20) having a first and a second connection means (23, 23') for rotationally supporting the throttle flap (20) in said duct (12), the second connection means (23') being opposed to the first connection means (23), the throttle flap (20) having a rotational axis (22) passing through the first and second connection means (23, 23') as well as an actuator (14) having an actuator shaft (24) connected to the throttle flap (20) via the first connection means (23) for transmitting rotational movement to the throttle flap (20). The actuator shaft (24) only extends into a peripheral region of the throttle flap (20), and the throttle flap (20) is mounted with axial play between the actuator shaft (24) and a duct wall portion diametrically opposite the actuator shaft (24).

## Description

### FIELD OF THE INVENTION

The present invention generally relates to a throttle device for controlling a gas flow, in particular in an internal combustion engine.

### BACKGROUND OF THE INVENTION

Throttle devices for automotive internal combustion engines are used in the vast majority of engines. The mass production of throttle devices has left the usual metallic throttle devices on the side, to focus, with cost and weight reasons in mind, on plastic throttle devices. Document EP 0 575 235 B1 discloses a plastic throttle device comprising a plastic duct, a plastic throttle shaft rotating in the duct and a plastic throttle flap fixedly mounted to the throttle shaft, so that the throttle flap is able to more or less block the air passage in the duct depending on its rotational position. The plastic material is chosen in order to minimize the shrinkage after the moulding operation. The throttle shaft and the throttle flap are ultrasonically welded together after they are mounted in the duct. Hence, the throttle flap is optimally positioned in the duct with respect to the throttle shaft. Such a complete plastic throttle device can however show some dimensional changes over time so that some parts may deform. Thus, good engine control is not guaranteed, especially in transient operation. In severe deformation cases, the throttle flap can get stuck in the duct.

Document EP 0 678 157 B1 discloses a plastic throttle device comprising a plastic duct, an actuator shaft rotating in the duct and a throttle flap fixedly mounted to the actuator shaft. The throttle device comprises an insert in the duct that is completely over moulded during the plastic injection moulding operation of the throttle device. The insert is preferably of annular shape and has a diameter slightly larger than the inner diameter of the duct and is located within the wall portion of the duct situated around the throttle flap in closed position. The insert stiffens the duct, so that after the plastic injection moulding operation, the duct stays dimensionally stable during the cool down period and also during operation of the engine. Consequently, the insert yields a good engine control at low loads when the throttle flap is almost closed. However, at high temperatures, the metal shaft expands less than the duct and the throttle flap of the throttle body and the throttle flap is no longer necessarily centred in the duct. The throttle shaft moves the throttle flap against one of the sides of the interior of the duct along the throttle shaft axis. As a result, the throttle flap and the duct interfere and rub one against another in proximity of the actuator shaft bearings. Such a rubbing can cause high wear and can even cause the throttle flap to get stuck. Furthermore, such a throttle device has a rather complicated production process. The throttle device also involves higher material and labour costs.

### OBJECT OF THE INVENTION

The object of the present invention is to provide an improved throttle device wherein a throttle flap is prevented from getting stuck in the duct. This object is achieved by a throttle device as claimed in claim 1.

### SUMMARY OF THE INVENTION

The present invention discloses a throttle device for controlling a gas flow, in particular in an internal combustion engine. The throttle device comprises a throttle flap rotationally arranged in a duct for controlling a gas flow therethrough, the throttle flap having a first and a second connection means for rotationally supporting the throttle flap in the duct, the second connection means being diametrically opposed to the first connection means. The throttle flap has a rotational axis passing through the first and second connection means as well as an actuator having an actuator shaft connected to the throttle flap via the first connection means for transmitting rotational movement to the throttle flap. According to an important aspect of the invention, the actuator shaft only extends into a peripheral region of the throttle flap, and the throttle flap is mounted with axial play between the actuator shaft and a duct wall portion diametrically opposite the actuator shaft.

As a result, the throttle flap can have a relative axial movement along the rotational axis. When the temperature of the gas flowing through the throttle device rises, the dimensions of all the parts constituting the throttle device may change. If not all the parts have the same thermal expansion, they will move with respect to one another, thus changing their relative position. Since the throttle flap is designed to closely fit in the duct, a change in dimensions may cause the edge of the throttle flap to come into contact with the inner wall of the duct. Hence, the supplementary degree of liberty introduced in the form of the axial play between the throttle flap and the duct wall, resp. the actuator shaft, allows a movement of the throttle shaft in the duct along the rotational axis while the actuation of the throttle flap via the actuator shaft is still possible. Due to the axial play, the throttle flap is prevented from rubbing against the inner side wall of the duct and from getting stuck therein. It follows that efficiency of the throttle device is hence guaranteed.

Advantageously, the first connection means comprises a first bearing and an actuator shaft end engaging the first bearing; and the second connection means comprises a second bearing and a guide engaging the second bearing. The first and second bearings support the rotation of the throttle flap. The actuator shaft end and the guide are the complementary elements of the first and second bearings, which help to define and support the rotation of the throttle flap relative to the duct.

Preferably, the actuator shaft end, resp. the guide, and the first, resp. second, bearings of the first, resp. second, connection means are arranged such that a base surface of the actuator shaft end, resp. guide, is in spaced arrangement with a facing base surface of the first, resp. second, bearing, thereby allowing axial movement of the bearings with respect to the actuator shaft end, resp. guide, and consequently of the throttle flap with respect to the duct.

The actuator shaft end and the first bearing of the first connection means advantageously have corresponding radial mating surfaces allowing simultaneous rotation of both the actuator shaft end and the first bearing. The first connection means ensures the rotational support of the throttle flap but also the torque transmission between the actuator shaft and the throttle flap. This first connection means is hence a slideable connection, which can be materialised e.g. by some toothed fluting or a key-groove connection, which have corresponding radial mating surfaces.

In a preferred embodiment, the first and second bearings are connected to the throttle flap, and the guide of the second connection means is connected to the duct wall portion diametrically opposite the actuator shaft. The first and second bearings can be integrally formed with the throttle flap. The guide can be part of the duct or can extend into the duct through the duct wall.

Preferably, the actuator shaft end, resp. the guide, and the first, resp. second, bearings are cylindrical. This embodiment is a simple design to achieve rotational support of the throttle flap, simultaneous rotation of the throttle flap and the actuator shaft as well as the axial play. The guide of the second connection means is preferably a simple circular cylinder engaging in a corresponding cylindrical hole made in the second bearing.

The actuator shaft end has advantageously a D-shaped cross-section. The D-shape is a simple means to achieve the formation of a radial mating surface in the actuator shaft end in order to transmit the torque from the actuator shaft to the throttle flap. It is clear that other sectional shapes are possible such as e.g. a triangular shape. Preferably however, the chosen shape should be a non-regular polygonal shape so as to avoid the possibility of an incorrect mounting of the parts. It will however be understood that such shapes are more expensive to machine.

In a preferred embodiment, the duct and/or the throttle flap is made of plastic material, preferably polyetherimide (PEI) or polyphthalamide (PPA). A plastic injection moulded part can be produced very quickly. Plastic injection moulding allows complicated shapes and hence, integration of many functions into one single part. The combination of low production cycle time, low cost of plastic and reduction of components leads to significant cost savings.

Advantageously, the duct and the throttle flap are made of the same plastic material. In such an arrangement, the duct and the throttle flap should have almost the same expansion rate, which ensures a more constant play between the outer diameter of the throttle flap and the inner diameter of the duct, thereby further limiting the risk of the throttle flap to get stuck in the duct. For rationalisation purposes also, it is much more cost effective to use the same material during the production process of these two parts.

In a preferred execution, the throttle device is an automotive Manifold Vacuum Regulator Valve (MVRV). Such manifold vacuum regulator valves are mainly used in recent Diesel engines to adapt the engine's speed-load point to the driver's demand, while maintaining optimal consumption and low emissions.

### BRIEF DESCRIPTION OF THE DRAWINGS

The present invention will now be described, by way of example, with reference to the accompanying drawings, in which:
- FIG. 1:: is a side view of a plastic throttle body;
- FIG. 2:: is a section view through cut A-A of Fig. 1 of a plastic throttle device according to the present invention;
- FIG. 3:: is a perspective view of an actuator of the throttle device of Fig.1;
- FIG. 4:: is a section view of a first connection means between the actuator shaft and the throttle flap according to the present invention and
- FIG. 5:: is a section view of a second connection means between the throttle flap and the bearing end according to the present invention.

### DETAILED DESCRIPTION OF A PREFERRED EMBODIMENT

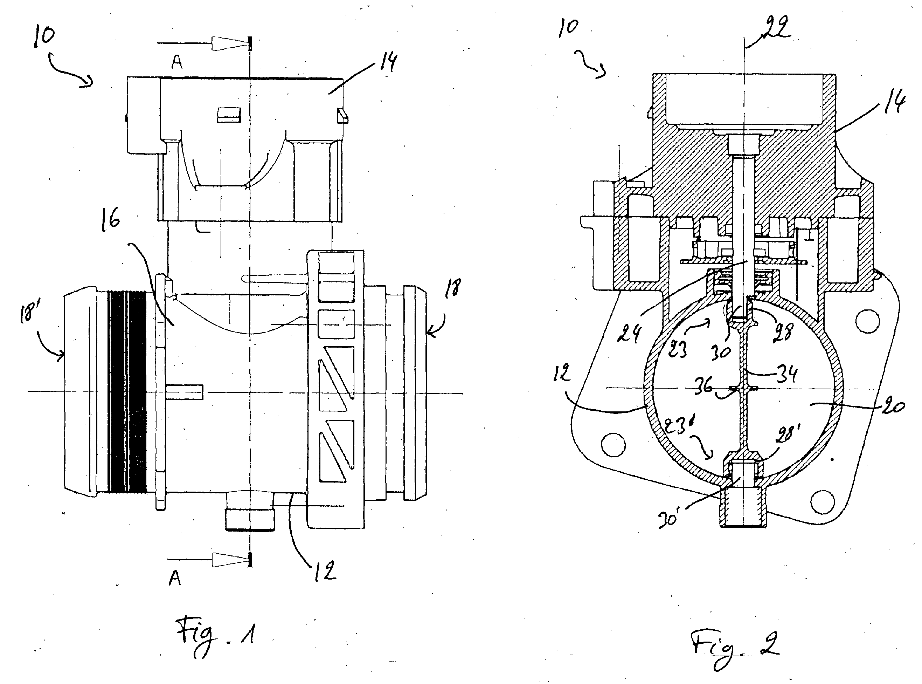

The general outside shape of a plastic throttle device 10 is shown on Fig. 1. The plastic throttle device 10 is mainly formed by a plastic tubular duct 12 associated with an electric actuator 14 fixedly mounted on a lateral side 16 of the duct 12. The duct 12 and the actuator 14 have a mainly cylindrical shape and are associated together so that their axes are perpendicular and secant. One of the advantages of a plastic design is that a lot of functional components as well as reinforcing ribs are directly moulded within the throttle device 10. The duct 12 has two open ends 18 and 18' through which a gas can flow when the throttle device 10 is inserted in the air intake circuit of an internal combustion engine.

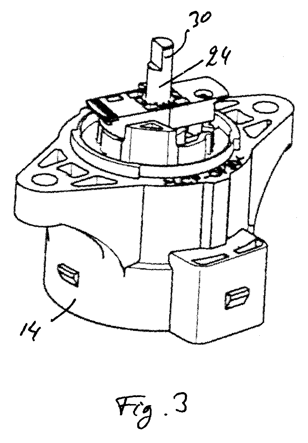

The moving parts of the plastic throttle device 10 according to the present invention are detailed on Fig. 2. The cutaway view of the plastic throttle device 12 shows the relative position as well as the actuation of a plastic throttle flap 20 in the duct 12. The throttle flap 20 can rotate around an axis 22 defined between a first connection means 23 and a diametrically opposed second connection means 23', wherein the first and second connection means 23, 23' rotatably maintain the throttle flap 20 in the duct 12. By rotating the throttle flap 20, the cross-section of the duct 12 is modified, which more or less restricts a gas passage through the duct 12. The first connection means 23 comprises a first bearing 28 arranged in the throttle flap 20 and an actuator shaft end 30 connected to the actuator shaft 24 of the actuator 14, wherein the actuator shaft end 30 engages the first bearing 28 for transmitting rotational movement of the actuator shaft 24 to the throttle flap 20. The second connection means 23' comprises a second bearing 28' arranged in the throttle flap 20 and a guide 30' engaging the second bearing 28'. For increased strength, the throttle flap 20 can be reinforced along its rotational axis with a main rib 34 and/or perpendicular side ribs 36.

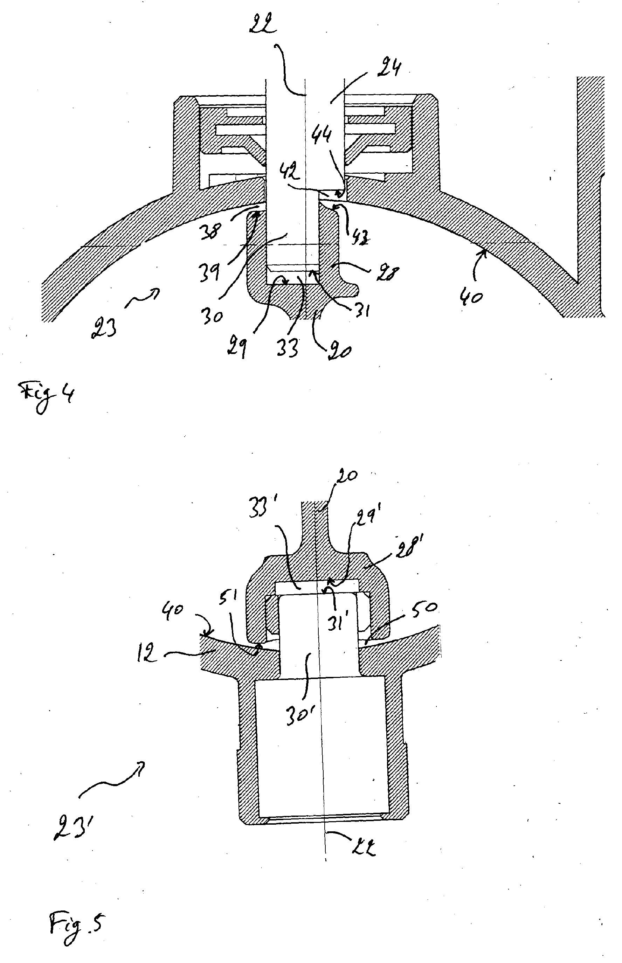

The guide 30' and the second bearing 28' have a corresponding circular shape, which allows rotation of the bearing 28' around the guide 30'. The actuator shaft end 30 of the actuator shaft 24 (which protrudes into the duct 12) and the first bearing 28 have a cooperating D-shaped section, which allows transmission of a rotational movement of the actuator shaft 24 to the throttle flap 20 via the first connection means 23. The first and second connection means 23, 23' are designed so as to give the throttle flap 20 a certain degree of axial play in a direction along the axis 22, as can be more clearly seen in Fig. 4 and Fig. 5. On Fig. 3, the D-shaped section of the actuator shaft end 30 of the actuator shaft 24 of the actuator 14 is shown in perspective for a better understanding of the transmission of rotational movement between the actuator shaft 24 and the throttle flap 20.

Fig. 4 shows a section view of the first connection means 23 between the actuator shaft 24 and the throttle flap 20. The actuator shaft end 30 of the actuator shaft 24 engages the first bearing 28. An axial play along the axis 22 exists between a base surface 29 of the first bearing 28 and a base surface 31 of the actuator shaft end 30. The base surfaces 29, 31 are in spaced relationship, thereby defining a first gap 33. There is a second gap 38 between the border 39 of the first bearing 28 of the throttle flap 20 and the inner surface 40 of the duct 12. A third gap 42 is also present between the border 43 of the first bearing 28 and an abutment surface 44 of the actuator shaft 24. The gaps 33, 38 and 42 allow a relative axial movement along axis 22 between the throttle flap 20 and the actuator shaft 24. Consequently, the throttle flap 20 has the possibility to slide along the actuator shaft end 30 while still being able to transmit rotational movement to the throttle flap 20.

Fig. 5 shows a section view of the second connection means 23' between a wall portion of the duct 12 and the throttle flap 20. The guide 30' engages the second bearing 28'. An axial play along the axis 22 exists between a base surface 29' of the second bearing 28' and a base surface 31' of the guide 30'. The base surfaces 29', 31' are in spaced relationship, thereby defining a fourth gap 33'. There is a fifth gap 50 between the border 51 of the second bearing 28' of the throttle flap 20 and the inner surface 40 of the duct 12. The gaps 33' and 50 allow a relative axial movement along axis 22 between the throttle flap 20 and the wall portion of the duct 12. Consequently, the throttle flap 20 has the possibility to slide along the guide 30' while still being able to rotate around the guide 30'.

During engine operation, the temperature of the plastic throttle device 10 varies mainly depending on the temperature of the gas in the duct. Due to the thermal expansion properties of all the constituting materials of the throttle device 10, the parts of the latter can expand or retract in all directions. The total stroke, which is the maximum displacement, which the throttle flap 20 can make in either direction, is calculated in order to avoid that the throttle flap 20 gets stuck in the duct 12. When the temperature increases, the plastic of the throttle flap 20 expands more than the metal, e.g. steel, of the actuator shaft 24. Usual plastic without filler has a thermal expansion coefficient of about 150 µm/(m·K), which has to be compared with the thermal expansion coefficient of steel that is 12 µm/(m·K). The total stroke will allow to absorb the difference in axial expansion rates between the throttle flap 20 and the actuator shaft end 30, resp. the guide 30', thereby avoiding any potential risk of the throttle flap 20 getting stuck. As a result, it will be noted that this floating design of the throttle flap 20 between the actuator shaft end 30 and the guide 30' automatically centres the throttle flap 20 in the duct 12. Hence, the throttle flap is prevented from getting stuck and the overall efficiency of the throttle device 10 is maintained.

## Claims

1. A throttle device (10) for controlling a gas flow, in particular in an internal combustion engine, said throttle device (10) comprising:
a throttle flap (20) rotationally arranged in a duct (12) for controlling a gas flow therethrough, said throttle flap (20) having a first and a second connection means (23, 23') for rotationally supporting said throttle flap (20) in said duct (12), said second connection means (23') being opposed to said first connection means (23), said throttle flap (20) having a rotational axis (22) passing through said first and second connection means (23, 23');
an actuator (14) having an actuator shaft (24) connected to the throttle flap (20) via said first connection means (23) for transmitting rotational movement to said throttle flap (20),
**characterized in that**
said actuator shaft (24) only extends into a peripheral region of said throttle flap (20), and
said throttle flap (20) is mounted with axial play between said actuator shaft (24) and a duct wall portion diametrically opposite said actuator shaft (24).

2. The throttle device (10) according to claim 1, wherein said first connection means (23) comprises:
a first bearing (28); and
a actuator shaft end (30) engaging said first bearing (28).

3. The throttle device (10) according to claim 1 or 2, wherein said second connection means (23') comprises:
a second bearing (28'); and
a guide (30') engaging said second bearing (28').

4. The throttle device (10) according to claim 2 or 3, wherein said actuator shaft end (30), resp said guide (30'), and said first bearing (28), resp said second bearing(28'), of said first and second connection means (23, 23') are arranged such that a base surface (31, 31') of said actuator shaft end (30) and said guide (30') are in spaced arrangement with a respective base surface (29, 29') of said first and second bearings (28, 28').

5. The throttle device (10) according to one of claims 2 to 4, wherein said actuator shaft end (30) and said first bearing (28) of said first connection means (23) have corresponding radial mating surfaces allowing simultaneous rotation of both said actuator shaft end (30) and said first bearing (28).

6. The throttle device (10) according to one of claims 2 to 5, wherein said first and second bearings (28, 28') are connected to said throttle flap (20),
said actuator shaft end (30) of said first connection means (23) is connected to said actuator shaft (24), and
said guide (30') of said second connection means (23') is connected to said duct wall portion opposite said actuator shaft (24).

7. The throttle device (10) according to claim 2 to 6, wherein said actuator shaft end (30), resp said guide (30') and said first and second bearings (28, 28') are cylindrical.

8. The throttle device (10) according to claim 2 to 7, wherein said actuator shaft end (30) has a D-shaped cross-section.

9. The throttle device (10) according to anyone of the preceding claims, wherein said duct (12) and said throttle flap (20) are preferably made of the same plastic material.

10. The throttle device (10) according to any one of the preceding claims wherein said throttle device (10) is an automotive Manifold Vacuum Regulator Valve (MVRV).
